# EUROPÄISCHE PATENTSCHRIFT

(11) **EP 1 442 586 B1**
(45) Veröffentlichungstag und Bekanntmachung des Hinweises auf die Patenterteilung: **23.05.2012**
(21) Anmeldenummer: 02772028.3
(22) Anmeldetag: 22.08.2002
(51) Int. Cl.: H04M 3/436

(54) **VERFAHREN ZUR SIGNALISIERUNG EINES FÜR EIN TELEKOMMUNIKATIONSENDGERÄT EINGEHENDEN RUFES, TELEKOMMUNIKATIONSENDGERÄT UND NETZWERKEINHEIT**
METHOD FOR SIGNALING AN INCOMING CALL FOR A TELECOMMUNICATIONS TERMINAL, TELECOMMUNICATIONS TERMINAL AND A NETWORK UNIT
PROCEDE POUR LA SIGNALISATION D'UN APPEL ENTRANT POUR UN TERMINAL DE TELECOMMUNICATION, TERMINAL DE TELECOMMUNICATION ET UNITE DE RESEAU

(30) Priorität: 30.10.2001 DE 10153526
(43) Veröffentlichungstag der Anmeldung: 04.08.2004
(73) Patentinhaber: IPCom GmbH & Co. KG, 82049 Pullach (DE)
(72) Erfinder: JUPE, Michael, 71636 Ludwigsburg (DE); SCHMOLL, Klaus-Peter, 74251 Lehrensteinsfeld (DE)
(74) Vertreter: Gigerich, Jan
(86) Internationale Anmeldenummer: PCT/DE2002/003076
(87) Internationale Veröffentlichungsnummer: WO 2003/041376

(56) Entgegenhaltungen:
- EP-A- 0 726 669
- EP-A- 0 837 611
- US-A- 5 930 700
- US-B1- 6 289 084

## Beschreibung

### Stand der Technik

Die Erfindung geht von einem Verfahren zur Signalisierung eines für ein Telekommunikationsendgerät eingehenden Rufes, von einem Telekommunikationsendgerät und von einer Netzwerkeinheit nach der Gattung der unabhängigen Ansprüche aus.

Verfahren zur Signalisierung eines für ein Telekommunikationsendgerät eingehenden Rufes sind bereits bekannt. Ferner sind auch Telekommunikationsendgeräte mit einer Signalisierungsvorrichtung zur Signalisierung eingehender Rufe bekannt. Auch Netzwerkeinheiten eines Telekommunikationsnetzes mit einer Vorrichtung zum Weiterleiten eines eingehenden Rufes an ein angewähltes Telekommunikationsendgerät sind bereits bekannt.

EP0726669 A2 offenbart eine Empfangserlaubnis in einem Netzwerk. Die Empfangserlaubnis beruht auf dem Vergleich der spezifizierten Prioritätskriterien der angerufenen Seite mit denjenigen der rufenden Seite in einem Netzwerk. Sind sie identisch, wird die Verbindung zugelassen, ansonsten wird die Verbindung entweder weitergeleitet oder gar abgelehnt. Diese Prioritätskriterien auf der rufenden Seite sollen zwangsläufig identisch zu denjenigen Prioritätskriterien auf der angerufenen Seite sein. Falls der Empfang eines Rufes nicht erlaubt ist, müssen neue Prioritätskriterien auf der rufenden Seite eingegeben werden, um den Angerufenen zu erreichen.

### Vorteile der Erfindung

Das erfindungsgemäße Verfahren zur Signalisierung eines für ein Telekommunikationsendgerät eingehenden Rufes, das erfindungsgemäße Telekommunikationsendgerät und die erfindungsgemäße Netzwerkeinheit mit den Merkmalen der unabhängigen Ansprüche haben demgegenüber den Vorteil, dass bei der Signalisierung eines für ein Telekommunikationsendgerät eingehenden Rufes in einer Detektionsvorrichtung geprüft wird, ob mit dem eingehenden Ruf ein Dringlichkeitswert empfangen wurde, wobei, falls ein Dringlichkeitswert empfangen wurde, die Signalisierung des eingehenden Rufes am Telekommunikationsendgerät nur dann eingeleitet wird, wenn der mit dem eingehenden Ruf empfangene Dringlichkeitswert einen vorgegebenen Schwellwert überschreitet, wobei, falls kein Dringlichkeitswert empfangen wurde, eine Mitteilung über den Schwellwert dem rufenden Teilnehmer übertragen wird. Auf diese Weise kann gewährleistet werden, dass eine Signalisierung eines eingehenden Rufes in Abhängigkeit der Dringlichkeit des eingehenden Rufes erfolgt. Der Benutzer des Telekommunikationsendgerätes kann somit vor allem in Situationen, in denen die Signalisierung als Störung empfunden wird, vor unwichtigeren Anrufen bewahrt bleiben. Auf der anderen Seite, wenn kein Dringlichkeitswert bei der Signalisierung des eingehenden Rufes am Telekommunikationsendgerät empfangen wurde, kann der rufende Teilnehmer noch vor Setzen eines Dringlichkeitswertes über den Schwellwert informiert und ein Risiko des Störens des Benutzers des Telekommunikationsendgerätes verringert werden.

Durch die in den Unterarisprüchen aufgeführten Maßnahmen sind vorteilhafte Weiterbildungen und Verbesserungen des Verfahrens zur Signalisierung eines für ein Telekommunikationsendgerät eingehenden Rufes, des Telekommunikationsendgerätes und der Netzwerkeinheit gemäß den unabhängigen Ansprüchen möglich.

Besonders vorteilhaft ist es, wenn der vorgegebene Schwellwert an einer Eingabeeinheit des Telekommunikationsendgerätes eingegeben wird. Auf diese Weise kann der Benutzer des Telekommunikationsendgerätes selbst einen Schwellwert vorgeben und diesen an die Störempfindlichkeit der jeweiligen Situation anpassen.

Ein weiterer Vorteil ergibt sich, wenn der Dringlichkeitswert bei einem rufenden Teilnehmer eingegeben wird. Auf diese Weise kann der rufende Teilnehmer selbst bestimmen, wie wichtig es ihm ist, den Benutzer des Telekommunikationsendgerätes zu erreichen.

Eine besonders einfache Möglichkeit zur Eingabe und Übertragung eines solchen Dringlichkeitswertes ergibt sich, wenn der Dringlichkeitswert an eine gewählte Rufnummer angehängt wird.

Ein weiterer Vorteil ergibt sich, wenn der Dringlichkeitswert mit dem Schwellwert in einer Netzwerkeinheit eines Telekommunikationsnetzes verglichen wird und wenn der für das Telekommunikationsendgerät eingehende Ruf von der Netzwerkeinheit nur dann an das Telekommunikationsendgerät weitergeleitet wird, wenn der Dringlichkeitswert den Schwellwert überschreitet. Auf diese Weise ist kein zusätzlicher Aufwand zur Realisierung der dringlichkeitsabhängigen Signalisierungsunterdrückung beim Telekommunikationsendgerät selbst erforderlich, so dass für die Herstellung des Telekommunikationsendgerätes keine zusätzlichen Kosten anfallen.

Wird hingegen der Dringlichkeitswert mit dem Schwellwert im Tetekommunikationsendgerät verglichen und eine Signalisierung des eingehenden Rufes am Telekommunikationsendgerät nur dann eingeleitet, wenn der Dringlichkeitswert den Schwellwert überschreitet, so lässt sich die dringlichkeitsabhängige Signalisierungsunterdrückung weitgehend unabhängig vom Telekommunikationsnetz beziehungsweise von den Netzwerkeinheiten des Telekommunikationsnetzes realisieren.

Ein weiterer Vorteil ergibt sich, wenn nur für den Fall, in dem der Dringlichkeitswert kleiner oder gleich dem Schwellwert ist, eine Mitteilung über den Schwellwert an den rufenden Teilnehmer übertragen wird. Auf diese Weise kann der rufende Teilnehmer darüber informiert werden, wie er den Benutzer des Telekommunikationsendgerätes durch geeignete Wahl des Dringlichkeitswertes telefonisch erreichen kann. Der rufende Teilnehmer kann somit entscheiden, ob er den Benutzer des Telekommunikationsendgerätes mit seinem Anruf stören will oder nicht. Er kann dabei diese Entscheidung in Abhängigkeit der Wichtigkeit seines Anrufes treffern.

Weiterhin vorteilhaft ist es, wenn für den Fall, in dem der Dringlichkeitswert kleiner oder gleich dem Schwellwert ist, der eingehende Ruf in einer Anrufliste gespeichert wird. Auf diese Weise wird der Benutzer des Telekommunikationsendgerätes auch dann über den eingehenden Ruf informiert, wenn seine Signalisierung am Telekommunikationsendgerät aufgrund des gesetzten Schwellwertes unterdrückt wird.

Dieser Vorteil kann auch dadurch erreicht werden, dass für den Fall, in dem der Dringlichkeitswert kleiner oder gleich dem Schwellwert ist, der eingehende Ruf an einen Anrufbeantworter weitergeleitet wird. Dies hat zusätzlich den Vorteil, dass der rufende Teilnehmer eine Nachricht für den Benutzer des Telekommunikationsendgerätes hinterlassen kann, so dass sich ein Rückruf des Benutzers des Telekommunikationsendgerätes gegebenenfalls erübrigt.

Ein weiterer Vorteil ergibt sich, wenn die Signalisierung des eingehenden Rufes am Telekommunikationsendgerät nur dann eingeleitet wird, wenn die Rufnummer des rufenden Teilnehmers mit einer vorgegebenen Rufnummer übereinstimmt. Auf diese Weise kann sichergestellt werden, dass der Benutzer des Telekommunikationsendgerätes nur von ausgewählten rufenden Teilnehmern telefonisch erreichbar ist. Eingehende Rufe von unliebsamen Anrufern können auf diese Weise unterdrückt werden.

Besonders vorteilhaft ist es, wenn am Telekommunikationsendgerät eine Eingabeeinheit vorgesehen ist, über die der Schwellwert und/oder der Dringlichkeitswert vorgebbar ist. Auf diese Weise kann der Benutzer des Telekommunikationsendgerätes, je nach gewünschtem Schutz vor Störung durch die Signalisierung eines eingehenden Rufes am Telekommunikationsendgerät, den Schwellwert geeignet einstellen. Der rufende Teilnehmer kann je nach Wichtigkeit seines Anrufes den Dringlichkeitswert entsprechend einstellen.

Ein weiterer Vorteil ergibt sich, wenn die Netzwerkeinheit eine Extraktionsvorrichtung umfasst, die aus einer vom rufenden Teilnehmer empfangenen Nummernfolge eine Rufnummer des Telekommunikationsendgerätes und den Dringlichkeitswert extrahiert. Auf diese Weise lässt sich der Dringlichkeitswert einfach vom rufenden Teilnehmer beim Anwählen des Telekommunikationsendgerätes an dessen Rufnummer anhängen.

### Zeichnung

Ausführungsbeispiele der Erfindung sind in der Zeichnung dargestellt und in der nachfolgenden Beschreibung näher erläutert. Es zeigen
Figur 1 ein Blockschaltbild einer ersten Ausführungsform der Erfindung,
Figur 2 ein Blockschaltbild einer zweiten Ausführungsform der Erfindung und
Figur 3 einen Ablaufplan für das erfindungsgemäße Verfahren.

### Beschreibung der Ausführungsbeispiele

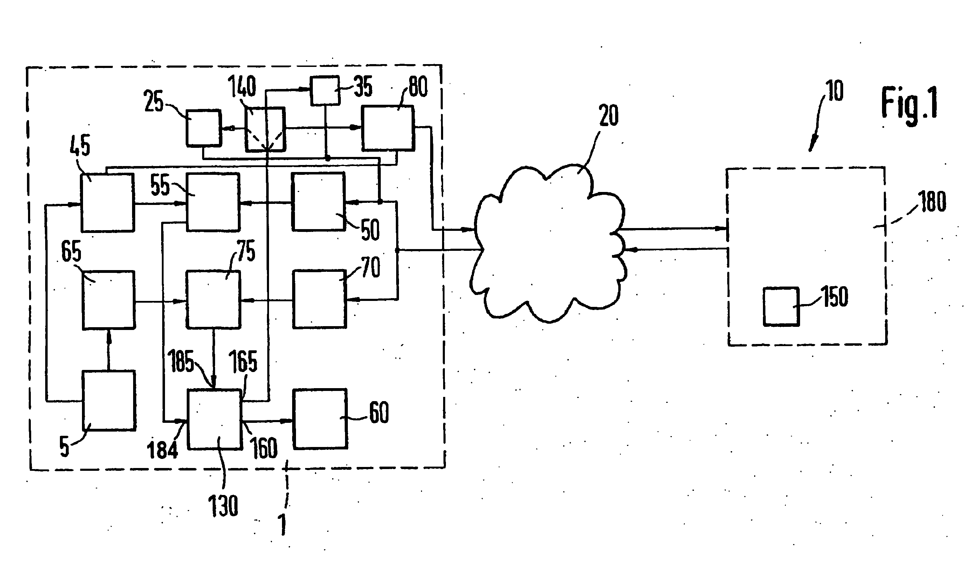

In Figur 1 kennzeichnet 1 ein Telekommunikationsendgerät. Dabei kann es sich beispielsweise um ein Mobiltelefon, ein schnurloses Telefon oder ein schnurgebundenes Telefon handeln. Das Telekommunikationsendgerät 1 umfasst eine erste Eingabeeinheit 5, die beispielsweise als alphanumerische Zehnertastatur ausgebildet sein kann. An die Eingabeeinheit 5 ist eine erste Speichervorrichtung 45 und ein erster Rufnummernspeicher 65 angeschlossen. An die erste Speichervorrichtung 45 ist eine erste Vergleichsvorrichtung 55 angeschlossen, die andererseits mit einer ersten Detektionsvorrichtung 50 verbunden ist. An den ersten Rufnummernspeicher 65 ist eine zweite Vergleichsvorrichtung 75 angeschlossen, die andererseits mit einer zweiten Detektionsvorrichtung 70 verbunden ist. Die erste Detektionsvorrichtung 50 und die zweite Detektionsvorrichtung 70 sind an ein Telekommunikationsnetz 20 entweder drahtgebunden oder über eine Luftschnittstelle angeschlossen und empfangen Signale aus dem Telekommunikationsnetz 20. Die erste Vergleichsvorrichtung 55 und die zweite Vergleichsvorrichtung 75 sind an ein erstes UND-Gatter 130 angeschlossen. Ein erster Ausgang 160 des ersten UND-Gatters 130 ist mit einer Signalisierungsvorrichtung 60 verbunden. Ein zweiter Ausgang 165 des ersten UND-Gatters 130 ist über einen Schalter 140 wahlweise mit einer ersten Anrufliste 25, mit einem ersten Anrufbeantworter 35 oder mit einer ersten Sendevorrichtung 80 verbindbar. Der erste Schalter 140 kann dabei so aufgebaut sein, dass er nur eine einzige dieser drei Komponenten 25, 35, 80 mit dem zweiten Ausgang 165 des ersten UND-Gatters 130 verbindet. Zusätzlich kann es vorgesehen sein, dass der erste Schalter 140 zwei dieser Komponenten 25, 35, 80 oder alle drei Komponenten 25, 35, 80 gleichzeitig mit dem ersten Ausgang 165 des ersten UND-Gatters 130 verbindet. Die Sendevorrichtung 80 ist dabei ebenfalls an das Telekommunikationsnetz 20 drahtgebunden oder durch eine Luftschnittstelle angeschlossen. Weiterhin kennzeichnet in Figur 1 das Bezugszeichen 10 einen rufenden Teilnehmer mit einem zweiten Telekommunikationsendgerät 180. Das zweite Telekommunikationsendgerät 180 kann dabei ebenfalls als Mobiltelefon, als schnurloses Telefon oder als schnurgebundenes Telefon ausgebildet sein und umfasst eine zweite Eingabeeinheit 150. Die zweite Eingabeeinheit 150 kann dabei ebenfalls beispielsweise als alphanumerische Zehnertastatur ausgebildet sein.

In Figur 1 sind nur solche Elemente dargestellt, die für das Verständnis der Erfindung erforderlich sind.

Im ersten Telekommunikationsendgerät 1 ist die zweite Detektionsvorrichtung 70, die zweite Vergleichsvorrichtung 75 und der erste Rufnummernspeicher 65 optional vorhanden. Wenn nun der rufende Teilnehmer 10 vom zweiten Telekommunikationsendgerät 180 durch Wahl der Rufnummer des ersten Telekommunikationsendgerätes 1 an der zweiten Eingabeeinheit 150 einen Ruf einleitet, so kann er über die Eingabeeinheit 150 auch einen Dringlichkeitswert setzen, der mit dem initiierten Ruf an das Telekommunikationsnetz 20 übertragen wird. Der Dringlichkeitswert kann dabei beispielsweise direkt nach der Rufnummer als Ziffer gewählt werden und somit ganzzahlig zwischen null und neun liegen. Gegebenenfalls kann es auch vorgesehen sein, den Wertebereich nach oben auszudehnen, wobei dann entsprechend mehr als eine Ziffer nach der Rufnummer für den Dringlichkeitswert an der zweiten Eingabeeinheit 150 eingegeben werden muss. Der Dringlichkeitswert wird vom Telekommunikationsnetz 20 zusammen mit einer Rufanforderung an das erste Telekommunikationsendgerät 1 übertragen. Die erste Detektionsvorrichtung 50 detektiert dabei aus dem eingehenden Ruf den Dringlichkeitswert. In der ersten Speichervorrichtung 45 ist ein vorgegebener Schwellwert abgelegt, der beispielsweise vom Benutzer des ersten Telekommunikationsendgerätes 1 an der ersten Eingabeeinheit 5 eingegeben worden sein kann oder fest vorgegeben ist. Die erste Vergleichsvorrichtung 55 prüft nun, ob der empfangene Dringlichkeitswert oberhalb des vorgegebenen Schwellwerts liegt. Ist dies der Fall, so wird ein erster Eingang 184 des ersten UND-Gatters 130 gesetzt. Ein zweiter Eingang 185 des ersten UND-Gatters 130 kann dabei fest voreingestellt ebenfalls gesetzt sein. Ist dies der Fall, so wird der erste Ausgang 160 des ersten UND-Gatters 130 ebenfalls gesetzt und die Signalisierungsvorrichtung 60 dadurch angewiesen, den eingehenden Ruf akkustisch und/oder optisch am ersten Telekommunikationsendgerät 1 zu signalisieren. Der zweite Ausgang 165 des ersten UND-Gatters 130 ist dabei nicht gesetzt, so dass weder die erste Anrufliste 25, noch der erste Anrufbeantworter 35 oder die erste Sendevorrichtung 80 angeschaltet wird.

Für den Fall, dass die erste Vergleichsvorrichtung 55 zu dem Ergebnis kommt, dass der Dringlichkeitswert kleiner oder gleich dem vorgegebenen Schwellwert ist, wird der erste Eingang 184 des ersten UND-Gatters 130 zurückgesetzt. Dadurch wird auch der erste Ausgang 160 des ersten UND-Gatters 130 zurückgesetzt und die Signalisierungsvorrichtung 60 dadurch angewiesen, den eingehenden Ruf nicht zu signalisieren und damit den Benutzer des ersten Telekommunikationsendgerätes 1 durch den eingehenden Ruf nicht zu stören. Gleichzeitig wird der zweite Ausgang 165 des ersten UND-Gatters 130 gesetzt. Dadurch wird über den ersten Schalter 140 die erste Anrufliste 25 und/oder der erste Anrufbeantworter 35 und/oder die erste Sendevorrichtung 80 aktiviert. Der erste Anrufbeantworter 35 und die erste Anrufliste 25 sind dabei ebenfalls an das Telekommunikationsnetz 20 angeschlossen. Wird die erste Anrufliste 25 durch das Setzen des zweiten Ausgangs 165 des ersten UND-Gatters 130 aktiviert, so speichert sie die Rufnummer des zweiten Telekommunikationsendgerätes 180, falls diese mit dem eingehenden Ruf an das erste Telekommunikationsendgerät 1 übertragen wurde, und ermöglicht auf diese Weise einen späteren Rückruf. Wird der erste Anrufbeantworter 35 durch das Setzen des zweiten Ausgangs 165 des ersten UND-Gatters 130 aktiviert, so nimmt der erste Anrufbeantworter 35 den eingehenden Ruf entgegen und ermöglicht dem rufenden Teilnehmer 10 die Aufnahme einer Nachricht, die vom Benutzer des Telekommunikationsendgerätes 1 beispielsweise zu einem späteren Zeitpunkt abgehört werden kann. Wird die erste Sendevorrichtung 80 durch das Setzen des zweiten Ausgangs 165 des ersten UND-Gatters 130 aktiviert, so sendet die erste Sendevorrichtung 80 den in der ersten Speichervorrichtung 45 gespeicherten, vorgegebenen Schwellwert über das Telekommunikationsnetz 20 an das zweite Telekommunikationsendgerät 180. Zu diesem Zweck ist die erste Sendevorrichtung 80 mit der ersten Speichervorrichtung 45 verbunden. Somit kann der rufende Teilnehmer 10 am zweiten Telekommunikationsendgerät 180 beispielsweise an einer in Figur 1 nicht dargestellten Wiedergabevorrichtung den vorgegebenen Schwellwert erkennen und erfährt somit, welchen Dringlichkeitswert er setzen muss, um eine Signalisierung seines Rufs am ersten Telekommunikationsendgerät 1 zu erreichen.

Wenn nun zusätzlich die zweite Detektionsvorrichtung 70, die zweite Vergleichsvorrichtung 75 und der erste Rufnummernspeicher 65 vorhanden sind, so kann zusätzlich folgende Funktionalität realisiert werden: wenn mit dem vom rufenden Teilnehmer 10 eingehenden Ruf auch die Rufnummer des zweiten Telekommunikationsendgerätes 180 über das Telekommunikationsnetz 20 zum ersten Telekommunikationsendgerät 1 übertragen wird, so kann die zweite Detektionsvorrichtung 70 diese Rufnummer detektieren. Im ersten Rufnummernspeicher 65 kann der Benutzer des ersten Telekommunikationsendgerätes 1 über die Eingabeeinheit 5 mindestens eine Rufnummer eines rufenden Teilnehmers speichern. Die zweite Vergleichsvorrichtung 75 vergleicht nun die von der zweiten Detektionsvorrichtung 70 detektierte Rufnummer des rufenden Teilnehmers 10 mit den im ersten Rufnummernspeicher 65 abgelegten Rufnummern. Liegt eine Übereinstimmung vor, das heißt, ist die von der zweiten Detektionsvorrichtung 70 detektierte Rufnummer des rufenden Teilnehmers 10 im ersten Rufnummernspeicher 65 abgelegt, so wird der zweite Eingang 185 des ersten UND-Gatters gesetzt. Somit erfolgt eine Signalisierung des eingehenden Rufs durch die Signalisierungsvorrichtung 60 für den Fall, dass der detektierte Dringlichkeitswert den vorgegebenen Schwellwerte überschreitet und dass die detektierte Rufnummer des rufenden Teilnehmers 10 im ersten Rufnummernspeicher 65 abgelegt ist. Ist eine der beiden Bedingungen nicht erfüllt, so wird in der beschriebenen Weise der erste Anrufbeantworter 35 und/oder die erste Anrufliste 25 und/oder die erste Sendevorrichtung 80 aktiviert und die Signalisierungsvörrichtung 60 deaktiviert und somit eine Signalisierung des eingehenden Rufes am ersten Telekommunikationsendgerät 1 unterdrückt. Dabei wird der zweite Eingang 185 des ersten UND-Gatters 130 zurückgesetzt, wenn die von der zweiten Detektionsvorrichtung 70 detektierte Rufnummer des rufenden Teilnehmers 10 nicht im ersten Rufnummernspeicher 65 abgelegt ist. Die im ersten Rufnummernspeicher 65 abgelegten Rufnummern bilden auf diese Weise eine positive VIP-Liste. Alternativ kann es auch vorgesehen sein, den ersten Rufnummernspeicher 65 als negative VIP-Liste zu realisieren und dort nur eine oder mehrere Rufnummern von rufenden Teilnehmern über die Eingabeeinheit 5 abzulegen, deren eingehender Ruf nicht signalisiert werden soll. In diesem Fall wird der zweite Eingang 185 des ersten UND-Gatters 130 von der zweiten Vergleichsvorrichtung 75 gesetzt, wenn die von der zweiten Detektionsvorrichtung 70 detektierte Rufnummer nicht im ersten Rufnummernspeicher 65 abgelegt ist. Umgekehrt setzt die zweite Vergleichsvorrichtung 75 den zweiten Eingang 185 des ersten UND-Gatters 130 zurück, wenn die von der zweiten Detektionsvorrichtung 70 detektierte Rufnummer des rufenden Teilnehmers 10 im ersten Rufnummernspeicher 65 abgelegt ist.

Für den Fall, dass der rufende Teilnehmer 10 bei der Anwahl des ersten Telekommunikationsendgerätes 1 keinen Dringlichkeitswert eingibt, kann auch die erste Detektionsvorrichtung 50 keinen Dringlichkeitswert detektieren und die erste Vergleichsvorrichtung 55 setzt den ersten Eingang 184 des ersten UND-Gatters 130 zurück, so dass eine Signalisierung am ersten Telekommunikationsendgerät 1 unterbleibt. Ist die erste Sendevorrichtung 80 über den ersten Schalter 140 durch den dann gesetzten zweiten Ausgang 165 des ersten UND-Gatters 130 aktiviert, so sendet sie den vorgegebenen Schwellwert über das Telekommunikationsnetz 20 in der beschriebenen Weise an den rufenden Teilnehmer 10. Auf diese Weise kann der rufende Teilnehmer 10 den vorgegebenen Schwellwert des ersten Telekommunikationsendgerätes 1 durch einen Anruf des ersten Telekommunikationsendgerätes 1 abfragen, ohne befürchten zu müssen, dass dieser Anruf zu einer Signalisierung am ersten Telekommunikationsendgerät 1 und somit zu einer Störung des Benutzers des ersten Telekommunikationsendgerätes 1 führt.

Für den Fall, dass der Benutzer des ersten Telekommunikationsendgerätes 1 einen Ruf an das Telekommunikationsnetz 20 absetzen will, kann es vorgesehen sein, dass er ebenfalls einen Dringlichkeitswert durch entsprechende Eingabe an der Eingabeeinheit 5 setzt, wobei dieser Dringlichkeitswert dann auf eine in Figur 1 nicht dargestellte Weise mit dem initiierten, abgehenden Ruf an das Telekommunikationsnetz 20 übertragen wird.

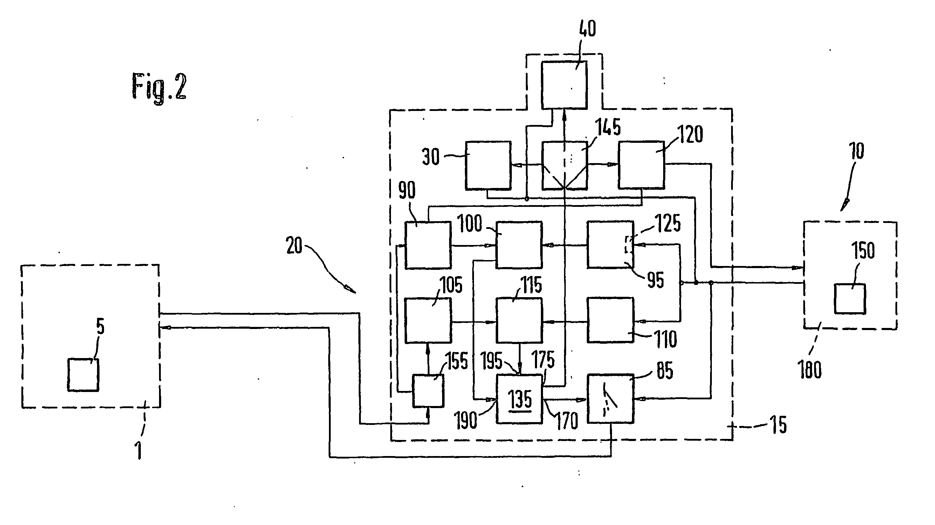

In Figur 2 ist eine zweite Ausführungsform der Erfindung dargestellt, in der gleiche Bezugszeichen gleiche Elemente kennzeichnen wie in Figur 1. Das erste Telekommunikationsendgerät 1 umfasst dabei die erste Eingabeeinheit 5. Das zweite Telekommunikationsendgerät 180 des rufenden Teilnehmers 10 umfasst die zweite Eingabeeinheit 150. Das erste Telekommunikationsendgerät 1 und das zweite Telekommunikationsendgerät 180 sind über das Telekommunikationsnetz 20 miteinander verbunden, wobei die Verbindung über eine Netzwerkeinheit 15 des Telekommunikationsnetzes 20 erfolgt. Dabei kann es sich beim Telekommunikationsnetz 20 um ein Mobilfunknetz oder ein Festnetz handeln. Auch kann es vorgesehen sein, dass das erste Telekommunikationsendgerät 1 ein Mobiltelefon und das Telekommunikationsnetz 20 ein Mobilfunknetz ist, wohingegen das zweite Telekommunikationsendgerät 180 ein schnurgebundenes Telefon sein kann und über ein in Figur 2 nicht dargestelltes Festnetz an das Telekommunikationsnetz 20 angeschlossen ist. Umgekehrt könnte auch das erste Telekommunikationsendgerät 1 ein schnurgebundenes Telekommunikationsendgerät sein, das Telekommunikationsnetz 20 ein Festnetz und das zweite Telekommunikationsendgerät 180 ein Mobiltelefon, das über ein in Figur 2 nicht dargestelltes Mobilfunknetz mit dem Telekommunikationsnetz 20 verbunden ist. Alternativ kann sowohl das erste Telekommunikationsendgerät 1 als auch das zweite Telekommunikationsendgerät 180 jeweils als Mobiltelefon und das Telekommunikationsnetz 20 als Mobilfunknetz ausgebildet sein. Alternativ kann sowohl das erste Telekommunikationsendgerät 1 als auch das zweite Telekommunikationsendgerät 180 als schnurgebundenes Telefon und das Telekommunikationsnetz 20 als Festnetz ausgebildet sein.

Die Netzwerkeinheit 15 umfasst eine dritte Detektionsvorrichtung 95 zum Empfang eines vom rufenden Teilnehmer 10 eingehenden Rufes. Die dritte Detektionsvorrichtung 95 umfasst eine Extraktionsvorrichtung 125 zur Extraktion eines mit dem eingehenden Ruf übertragenen Dringlichkeitswertes. An die dritte Detektionsvorrichtung 95 ist eine dritte Vergleichsvorrichtung 100 angeschlossen. Die dritte Vergleichsvorrichtung 100 ist andererseits mit einer zweiten Speichervorrichtung 90 verbunden. Außerdem ist die dritte Vergleichsvorrichtung 100 mit einem ersten Eingang 190 eines zweiten UND-Gatters 135 verbunden. Ein zweiter Eingang 195 des zweiten UND-Gatters 135 kann entweder permanent gesetzt sein oder optional, wie in Figur 2 dargestellt, mit einer vierten Vergleichsvorrichtung 115 verbunden sein. Ist die vierte Vergleichsvorrichtung 115 wie in Figur 2 dargestellt in der Netzwerkeinheit 15 vorgesehen, so ist sie einerseits mit einer vierten Detektionsvorrichtung 110 und andererseits mit einem zweiten Rufnummernspeicher 105 verbunden. Die vierte Detektionsvorrichtung 110 detektiert ebenfalls den vom rufenden Teilnehmer 10 eingehenden Ruf. Ein erster Ausgang 170 des zweiten UND-Gatters 135 ist mit einer Vorrichtung 85 zum Weiterleiten des vom rufenden Teilnehmer 10 eingehenden Rufes verbunden. Die Vorrichtung 85 zum Weiterleiten dient dabei zum Weiterleiten des vom rufenden Teilnehmer 10 eingehenden Rufes an das vom rufenden Teilnehmer 10 angewählte Telekommunikationsendgerät, das im Beispiel nach Figur 2 das erste Telekömmunikationsendgerät 1 ist. Ein zweiter Ausgang 175 des zweiten UND-Gatters 135 ist über einen zweiten Schalter 145 mit einer zweiten Anrufliste 30 und/oder einem zweiten Anrufbeantworter 40 und/oder einer zweiten Sendevorrichtung 120 verbindbar. Die zweite Sendevorrichtung 120 ist mit der zweiten Speichervorrichtung 90 verbunden. Die zweite Anrufliste 30 und der zweite Anrufbeantworter 40 sind an den Empfangszweig des eingehenden Rufes angeschlossen. Die zweite Sendevorrichtung 120 ist zum Senden von Informationen an einen rufenden Teilnehmer, in diesem Fall den rufenden Teilnehmer 10 vorgesehen. Die Netzwerkeinheit 15 umfasst weiterhin eine Auswahleinheit 155, die es einem Teilnehmer, im angerufenen Beispiel nach Figur 2, dem ersten Telekommunikationsendgerät 1 ermöglicht, entweder einen vorgegebenen Schwellwert in die zweite Speichervorrichtung 90 oder eine oder mehrere Rufnummern in den zweiten Rufnummernspeicher 105 zu schreiben, je nachdem, ob das erste Telekommunikationsendgerät 1 die zweite Speichervorrichtung 90 oder einen Speicherplatz im zweiten Rufnummernspeicher 105 adressiert. Die Auswahleinheit 155 ist nicht erforderlich, wenn der zweite Rufnummernspeicher 105 nicht vorhanden ist. In diesem Fall ist die zweite Speichervorrichtung 90 vom ersten Telekommunikationsendgerät 1 direkt zugänglich.

Die erfindungsgemäße Funktion der Netzwerkeinheit 15 beim zweiten Ausführungsbeispiel nach Figur 2 entspricht nun der zuvor beschriebenen erfindungsgemäßen Funktion des ersten Telekommunikationsendgerätes 1 gemäß dem ersten Ausführungsbeispiel nach Figur 1. Dabei entspricht die Funktion der dritten Detektionsvorrichtung 95 der Funktion der ersten Detektionsvorrichtung 50 mit dem Unterschied, dass die erste Detektionsvorrichtung 50 vom Telekommunikationsnetz 20 den Dringlichkeitswert direkt
empfängt, wohingegen die dritte Detektionsvorrichtung 95 den Dringlichkeitswert von der vom rufenden Teilnehmer 10 übertragenen Ziffernfolge bestehend aus der Rufnummer des ersten Telekommunikationsendgerätes 1 und des Dringlichkeitswertes mittels der Extraktionsvorrichtung 125 extrahieren muss. Weiterhin entspricht die Funktion der dritten Vergleichsvorrichtung 100 der Funktion der ersten Vergleichsvorrichtung 55 und die Funktion der zweiten Speichervorrichtung 90 der Funktion der ersten Speichervorrichtung 45. Die Funktion der vierten Detektionsvorrichtung 110 entspricht der Funktion der zweiten Detektionsvorrichtung 70. Die Funktion der vierten Vergleichsvorrichtung 115 entspricht der Funktion der zweiten Vergleichsvorrichtung 75. Die Funktion des zweiten Rufnummernspeichers 105 entspricht der Funktion des ersten Rufnummernspeichers 65. Die Eingabe des vorgegebenen Schwellwertes in die zweite Speichervorrichtung 90 erfolgt nun allerdings nicht direkt durch die erste Eingabeeinheit 5. Vielmehr muss nun über die erste Eingabeeinheit 5 die Netzwerkeinheit 15 angewählt und der gewünschte Schwellwert eingegeben werden, wobei dieser Schwellwert dann mittels einer Telekommunikationsverbindung vom ersten Telekommunikationsendgerät 1 zur Netzwerkeinheit 15 übertragen und dort in der zweiten Speichervorrichtung 90 abgelegt wird. Entsprechend erfolgt die Vorgabe und Speicherung von Rufnummern im zweiten Rufnummernspeicher 105. Ist in der Netzwerkeinheit 15 sowohl die zweite Speichervorrichtung 90 als auch der zweite Rufnummernspeicher 105 vorgesehen, so muss an der Eingabeeinheit 5 auch noch eingegeben werden, ob der zu speichernde Wert in der zweiten Speichervorrichtung 90 abgelegt werden soll, also der vorgegebene Schwellwert ist, oder im zweiten Rufnummernspeicher 105 und somit eine Rufnummer darstellt. Für den Fall, dass nur ein Schwellwert mit einer Ziffer oder einer Ziffernanzahl vorgegeben werden kann, die sich von der Ziffernanzahl herkömmlicher Rufnummern unterscheidet, kann die Auswahleinheit 155 auch aufgrund der Ziffernanzahl des empfangenen Wertes entscheiden, ob es sich dabei um einen Schwellwert oder eine Rufnummer handelt und den vom ersten Telekommunikationsendgerät 1 empfangenen Wert entsprechend in der zweiten Speichervorrichtung 90 oder im zweiten Rufnummernspeicher 105 ablegen.

Weiterhin entspricht die Funktion des zweiten UND-Gatters 135 der Funktion des ersten UND-Gatters 130. Die Funktion des zweiten Schalters 145 entspricht der Funktion des ersten Schalters 140. Die Funktion der zweiten Anrufliste 30 entspricht der Funktion der ersten Anrufliste 25. Die Funktion des zweiten Anrufbeantworters 40 entspricht der Funktion des ersten Anrufbeantworters 35. Die Funktion der zweiten Sendevorrichtung 120 entspricht der Funktion der ersten Sendevorrichtung 80. Im Unterschied zum ersten Ausführungsbeispiel nach Figur 1 ist der erste Ausgang 170 des zweiten UND-Gatters 135 nicht mit einer Signalisierungsvorrichtung sondern mit der Vorrichtung 85 zum Weiterleiten des eingehenden Rufes verbunden. Wenn der erste Ausgang 170 des zweiten UND-Gatters 135 gesetzt ist, das heißt also wenn der vom rufenden Teilnehmer 10 empfangene Dringlichkeitswert den in der zweiten Speichervorrichtung 90 gespeicherten vorgegebenen Schwellwert überschreitet und - bei positiver VIP-Liste im zweiten Rufnummernspeicher 105 - die Rufnummer des rufende Teilnehmers 10 im zweiten Rufnummernspeicher 105 abgelegt ist, dann wird die Vorrichtung 85 zum Weiterleiten des eingehenden Rufes veranlasst, den vom rufenden Teilnehmer 10 eingehenden Ruf an das erste Telekommunikationsendgerät 1 weiterzuleiten, bei dem dann in herkömmlicher Weise eine Signalisierung des eingehenden Rufes statfindet. Für den Fall, dass ein Rufnummernvergleich in der Netzwerkeinheit 15 nicht stattfindet, ist der zweite Eingang 195 des zweiten UND-Gatters 135 permanent gesetzt. Ist der detektierte Dringlichkeitswert kleiner oder gleich dem vorgegebenen Schwellwert, so ist der erste Ausgang 170 des zweiten UND-Gatters 135 zurückgesetzt und die Vorrichtung 85 zum Weiterleiten des eingehenden Rufes wird nicht aktiviert, das heißt sie leitet den vom rufenden Teilnehmer 10 eingehenden Ruf nicht an das erste Telekommunikationsendgerät 1 weiter, so dass am ersten Telekommunikationsendgerät 1 auch keine Signalisierung stattfindet. Wird, wie in Figur 2 dargestellt, mittels der vierten Vergleichsvorrichtung 115 auch ein Rufnummernvergleich durchgeführt, so findet ein Zurücksetzen des ersten Ausgangs 170 des zweiten UND-Gatters 135 auch dann statt, wenn - bei positiver VIP-Liste im zweiten Rufnummernspeicher 105 - die Rufnummer des rufenden Teilnehmers 10 nicht im zweiten Rufnummernspeicher 105 abgelegt ist. Auch in diesem Fall wird das Weiterleiten des eingehenden Rufes vom rufenden Teilnehmer 10 durch die Vorrichtung 85 unterbunden und eine Signalisierung am ersten Telekommunikationsendgerät 1 findet nicht statt. Ist der zweite Rufnummernspeicher 105 als negative VIP-Liste realisiert, so gilt das entsprechend zum ersten Rufnummernspeicher 65 Gesagte.

Die Funktion des zweiten Telekommunikationsendgerätes 180 mit der zweiten Eingabeeinheit 150 gemäß Figur 2 entspricht der bereits zum ersten Aüsführungsbeispiel in. Figur 1 beschriebenen Funktion.

Die Funktion des ersten Eingangs 190 des zweiten UND-Gatters 135 entspricht der Funktion des ersten Eingangs 184 des ersten UND-Gatters 130. Die Funktion des zweiten Eingangs 195 des zweiten UND-Gatters 135 entspricht der Funktion des zweiten Eingangs 185 des ersten UND-Gatters 135. Die Funktion des ersten Ausgangs 170 des zweiten UND-Gatters 135 entspricht der Funktion des ersten Ausgangs 160 des ersten UND-Gatters 130. Die Funktion des zweiten Ausgangs 175 des zweiten UND-Gatters 135 entspricht der Funktion des zweiten Ausgangs 165 des ersten UND-Gatters 130.

In zu den beiden beschriebenen Ausführungsformen alternativen Ausführungsformen kann auf das Vorsehen einer Anrufliste 25, 30 und/oder eines Anrufbeantworters 35, 40 und/oder einer Sendevorrichtung 80, 120 verzichtet werden.

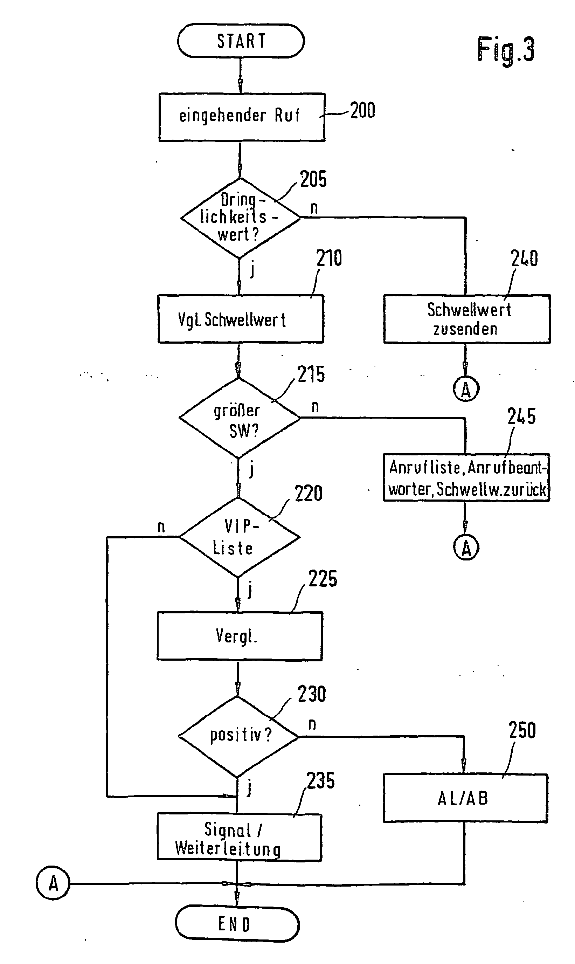

In Figur 3 ist der Ablauf des erfindungsgemäßen Verfahrens anhand eines Ablaufplans dargestellt. Der Ablauf gilt dabei sowohl für die erste Ausführungsform nach Figur 1 als auch für die zweite Ausführungsform nach Figur 2. Bei einem Programmpunkt 200 wird vom ersten Telekommunikationsendgerät 1 beziehungsweise von der Netzwerkeinheit 15 in der ersten Detektionsvorrichtung 50 beziehungsweise in der dritten Detektionsvorrichtung 95 ein eingehender Ruf detektiert. Anschließend wird zu einem Programmpunkt 205 verzweigt. Bei Programmpunkt 205 prüft die erste Detektionsvorrichtung 50 beziehungsweise die dritte Detektionsvorrichtung 95, ob mit dem eingehenden Ruf ein Dringlichkeitswert übertragen wurde. Ist dies der Fall, so wird zu einem Programmpunkt 210 verzweigt, andernfalls wird zu einem Programmpunkt 240 verzweigt. Bei Programmpunkt 210 vergleicht die erste Vergleichsvorrichtung 55 beziehungsweise die dritte Vergleichsvorrichtung 100 den detektierten Dringlichkeitswert met dem in der ersten Speichervorrichtung 45 beziehungsweise in der zweiten Speichervorrichtung 90 gespeicherten, vorgegebenen Schwellwert. Anschließend wird zu einem Programmpunkt 215 verzweigt. Bei Programmpunkt 215 prüft die erste Vergleichsvorrichtung 55 beziehungsweise die dritte Vergleichsvorrichtung 100, ob der detektierte Dringlichkeitswert den vorgegebenen Schwellwert überschreitet. Ist dies der Fall, so wird zu einem
Programmpunkt 220 verzweigt, andernfalls wird zu einem Programmpunkt 245 verzweigt. Bei Programmpunkt 220 prüft eine den Ablauf des Verfahrens kontrollierende Steuerung des ersten Telekommunikationsendgerätes 1 beziehungsweise der Netzwerkeinheit 15, die in den Figuren der Übersichtlichkeit halber nicht dargestellt ist, ob der erste Rufnummernspeicher 65 beziehungsweise der zweite Rufnummernspeicher 105 vorhanden ist. Ist dies der Fall, so wird zu einem Programmpunkt 225 verzweigt, andernfalls wird zu einem Programmpunkt 235 verzweigt. Die jeweilige Steuerung ist dabei mit sämtlichen Komponenten des ersten Telekommunikationsendgerätes 1 beziehungsweise mit sämtlichen Komponenten der Netzwerkeinheit 15 verbunden. Bei Programmpunkt 225 vergleicht die zweite Vergleichsvorrichtung 75 beziehungsweise die vierte Vergleichsvorrichtung 115 eine mit dem eingehenden Ruf übertragene Rufnummer des rufenden Teilnehmers 10 mit den Einträgen des ersten Rufnummernspeichers 65 beziehungsweise des zweiten Rufnummernspeichers 105. Anschließend wird zu einem Programmpunkt 230 verzweigt. Im Folgenden soll beispielhaft angenommen werden, dass der erste Rufnummernspeicher 65 beziehungsweise der zweite Rufnummernspeicher 105 als positive VIP-Liste ausgebildet ist. So wird bei Programmpunkt 230 von der zweiten Vergleichsvorrichtung 75 beziehungsweise von der vierten Vergleichsvorrichtung 115 geprüft, ob die empfangene Rufnummer des rufenden Teilnehmers 10 im ersten Rufnummernspeicher 65 beziehingsweise im zweiten Rufnummernspeicher 105 abgelegt ist. Ist dies der Fall, so wird zu einem Programmpunkt 235 verzweigt, andernfalls wird zu einem Programmpunkt 250 verzweigt. Bei Programmpunkt 235 wird im ersten Ausführungsbeispiel nach Figur 1 der erste Ausgang 160 des ersten UND-Gatters 130 gesetzt und die Signalisierungsvorrichtung 60 zur Signalisierung des eingehenden Rufes am ersten Telekommunikationsendgerät 1 aktiviert. Im zweiten Ausführungsbeispiel nach Figur 2 wird ebenfalls der erste Ausgang 170 des zweiten UND-Gatters 135 gesetzt und dadurch die Vorrichtung 85 zum Weiterleiten des eingehenden Rufes veranlasst, den eingehenden Ruf des rufenden Teilnehmers 10 an das erste Telekommunikationsendgerät 1 weiterzuleiten. Anschließend wird das Programm verlassen. Bei Programmpunkt 240 wird im ersten Ausführungsbeispiel nach Figur 1 der erste Eingang 184 des ersten UND-Gatters 130 und damit auch der erste Ausgang 160 des ersten UND-Gatters 130 zurückgesetzt und eine Signalisierung des eingehenden Rufes am ersten Telekommunikationsendgerät 1 verhindert. Gleichzeitig wird der zweite Ausgang 165 des ersten UND-Gatters 130 gesetzt und über den ersten Schalter 140 die erste Sendevorrichtung 80 aktiviert und veranlasst, den vorgegebenen Schwellwert über das Telekommunikationsnetz 20 an den rufenden Teilnehmer 10 zu senden.

Entsprechend wird beim zweiten Ausführungsbeispiel nach Figur 2 die zweite Sendevorrichtung 120 veranlasst, den vorgegebenen Schwellwert an den rufenden Teilnehmer 10 zu übertragen und die Vorrichtung 85 wird veranlasst, den eingehenden Ruf des rufenden Teilnehmers 10 nicht an das erste Telekommunikationsendgerät 1 weiterzuleiten. Anschließend wird das Programm verlassen.

Bei Programmpunkt 245 wird beim ersten Ausführungsbeispiel gemäß Figur 1 der erste Eingang 184 des UND-Gatters 130 und damit auch der erste Ausgang 160 des ersten UND-Gatters 130 zurückgesetzt und eine Signalisierung am ersten Telekommunikationsendgerät 1 verhindert. Gleichzeitig wird der zweite Ausgang 165 des ersten UND-Gatters 130 gesetzt und die erste Anrufliste 25 und/oder der erste Anrufbeantworter 35 und/oder die erste Sendevorrichtung 80 in der beschriebenen Weise aktiviert. Entsprechend wird beim zweiten Ausführungsbeispiel nach Figur 2 die zweite Anrufliste 30 und/oder der zweite Anrufbeantworter 40 und/oder die zweite Sendevorrichtung 120 aktiviert und die Vorrichtung 85 zum Weiterleiten des eingehenden Rufes veranlasst, den vom rufenden Teilnehmer 10 eingehenden Ruf nicht an das erste Telekommunikationsendgerät 1 weiterzuleiten. Anschließend wird das Programm verlassen.

Bei Programmpunkt 250 wird beim ersten Ausführungsbeispiel nach Figur 1 der zweite Eingang 185 des ersten UND-Gatters 130 und damit auch der erste Ausgang 160 des ersten UND-Gatters 130 zurückgesetzt und eine Signalisierung des eingehenden Rufes am ersten Telekommunikationsendgerät 1 verhindert. Gleichzeitig wird der zweite Ausgang 165 des ersten UND-Gatters 130 gesetzt und über den ersten Schalter 140 die erste Anrufliste 25 und/oder der erste Anrufbeantworter 35 in der beschriebenen Weise aktiviert. Entsprechend wird beim zweiten Ausführungsbeispiel nach Figur 2 die zweite Anrufliste 30 und/oder der zweite Anrufbeantworter 40 in der beschriebenen Weise aktiviert und die Vorrichtung 85 zum Weiterleiten des eingehenden Rufes veranlasst, den vom rufenden Teilnehmer 10 eingehenden Ruf nicht an das erste Telekommunikationsendgerät 1 weiterzuleiten. Anschließend wird das Programm verlassen.

Wenn im ersten Ausführungsbeispiel nach Figur 1 der erste Rufnummernspeicher 65, die zweite Vergleichsvorrichtung 75 und die zweite Detektionsvorrichtung 70 beziehungsweise beim zweiten Ausführungsbeispiel nach Figur 2 der zweite Rufnummernspeicher 105, die vierte Vergleichsvorrichtung 115 und die vierte Detektionsvorrichtung 110 vorgesehen sind, so kann es vorgesehen sein, dass der Benutzer des ersten Telekommunikationsendgerätes 1 an der Eingabeeinheit 5 den ersten Rufnummernspeicher 65 beziehungsweise den zweiten Rufnummernspeicher 105 deaktivieren kann, wobei dies beim ersten Ausführungsbeispiel nach Figur 1 direkt und beim zweiten Ausführungsbeispiel nach Figur 2 über eine Telekommunikationsverbindung zwischen dem ersten Telekommunikationsendgerät 1 und der Netzwerkeinheit 15 erfolgt. In diesem Fall wird beim ersten Ausführungsbeispiel nach Figur 1 der zweite Eingang 185 des ersten UND-Gatters 130 permanent gesetzt und beim zweiten Ausführungsbeispiel nach Figur 2 wird der zweite Eingang 195 des zweiten UND-Gatters 135 permanent gesetzt. Der Benutzer des ersten Telekommunikationsendgerätes 1 hat somit die Möglichkeit, einen vorhandenen Rufnummernspeicher nicht zur Blockierung der Signalisierung eingehender Rufe einzusetzen.

Da die Netzwerkeinheit 15 gemäß dem zweiten Ausführungsbeispiel nach Figur 2 in der Regel nicht nur dem ersten Telekommunikationsendgerät 1 als angerufenen Teilnehmer zugeordnet ist, können in der zweiten Speichervorrichtung 90 die Schwellwerte von mehreren Telekommunikationsendgeräten abgelegt sein. Entsprechend können im zweiten Rufnummernspeicher 105 die VIP-Listen von mehreren Telekommunikationsendgeräten abgelegt sein. Die dritte Vergleichsvorrichtung 100 muss dann anhand der mit dem eingehenden Ruf vom rufenden Teilnehmer 10 übertragenen Rufnummer des angewählten Telekommunikationsendgerätes den diesem Telekommunikationsendgerät zugeordneten Schwellwert aus der zweiten Speichervorrichtung 90 ermitteln und mit dem in der dritten Detektionsvorrichtung 95 detektierten Dringlichkeitswert vergleichen. Dazu können die Schwellwerte in der zweiten Speichervorrichtung 90 in Zuordnung zur Rufnummer des jeweiligen Telekommunikationsendgerätes abgespeichert sein. Entsprechendes gilt für die im zweiten Rufnummernspeicher 105 gespeicherten VIP-Listen, die ebenfalls jeweils der Rufnummer des entsprechenden Telekommunikationsendgerätes zugeordnet sind. Die vierte Vergleichsvorrichtung 115 vergleicht dann die mit dem eingehenden Ruf empfangene Rufnummer des rufenden Teilnehmers 10 in entsprechender Weise mit den Einträgen der VIP-Liste im zweiten Rufnummernspeicher 105, die der Rufnummer des vom rufenden Teilnehmer 10 angerufenen Telekömmunikationsendgerätes zugeordnet ist.

Der Benutzer des ersten Telekommunikationsendgerätes 1 kann über die erste Eingabeeinheit 5 den Schwellwert, beispielsweise von null bis neun, vorgeben. Ist das erste Telekommunikationsendgerät 1 als Mobiltelefon ausgebildet und sitzt der Benutzer des ersten Telekommunikationsendgerätes 1 an seinem Arbeitsplatz, so kann er den Schwellwert niedrig setzen, beispielsweise auf drei. Ist er in einer Besprechung, so kann er den Schwellwert hochsetzen, beispielsweise auf sieben oder acht. Er ist dann an seinem Arbeitsplatz leichter erreichbar als in der Besprechung. Umgekehrt kann der rufende Teilnehmer 10 bestimmen, wie wichtig ihm der Anruf ist. Will er mitteilen, dass der Wellensittich gestorben ist, so wählt er an der zweiten Eingabeeinheit 150 einen niedrigen Dringlichkeitswert, beispielsweise eins. Hat er eine dringende Nachricht, so kann er einen hohen Dringlichkeitswert, beispielsweise neun, wählen.

Weiterhin kann es vorgesehen sein, dass zusätzlich oder alternativ zu einer Deaktivierung des ersten Rufnummernspeichers 65 beziehungsweise des zweiten Rufnummernspeichers 105 in entsprechender Weise auch eine Deaktivierung des Schwellwerts in der ersten Speichervorrichtung 45 beziehungsweise in der zweiten Speichervorrichtung 90 durch den Benutzer des ersten Telekommunikationsendgerätes 1 mittels der ersten Eingabeeinheit 5 möglich ist. In diesem Fall wird der erste Eingang 184 des ersten UND-Gatters 130 beim ersten Ausführungsbeispiel nach Figur 1 beziehungsweise der erste Eingang 190 des zweiten UND-Gatters 135 beim zweiten Ausführungsbeispiel nach Figur 2 permanent gesetzt. Umgekehrt kann die Störschwelle in der ersten Speichervorrichtung 45 beziehungsweise in der zweiten Speichervorrichtung 90 und/oder der erste Rufnummernspeicher 65 beziehungsweise der zweite Rufnummernspeicher 105 durch entsprechende Eingabe an der ersten Eingabeeinheit 5 des ersten Telekommunikationsendgerätes 1 wieder aktiviert werden, um beispielsweise den in Figur 3 dargestellten Ablauf zu realisieren.

In dem Fall, in dem mit dem eingehenden Ruf kein Dringlichkeitswert übertragen wird, kann dies von der ersten Detektionsvorrichtung 50 beziehungsweise von der dritten Detektionsvorrichtung 95 so interpretiert werden, dass der kleinstmögliche Dringlichkeitswert übertragen wurde, der kleiner oder gleich jedem vorgebbaren Schwellwert ist.

## Patentansprüche

1. Verfahren zur Signalisierung eines für ein Telekommunikationsendgerät (1) eingehenden Rufes, wobei in einer Detektionsvorrichtung geprüft wird, ob mit dem eingehenden Ruf ein Dringlichkeitswert empfangen wurde, wobei, falls ein Dringlichkeitswert empfangen wurde, die Signalisierung des eingehenden Rufes am Telekommunikationsendgerät (1) nur dann eingeleitet wird, wenn der mit dem eingehenden Ruf empfangene Dringlichkeitswert einen vorgegebenen Schwellwert überschreitet, **dadurch gekennzeichnet, dass** falls kein Dringlichkeitswert empfangen wurde, eine Mitteilung über den Schwellwert dem rufenden Teilnehmer (10) übertragen wird.

2. Verfahren nach Anspruch 1, **dadurch gekennzeichnet, dass** der vorgegebene Schwellwert mit einer Eingabeeinheit (5) des Telekommunikationsendgerätes (1) eingegeben wird.

3. Verfahren nach Anspruch 1 oder 2, **dadurch gekennzeichnet, dass** der Dringlichkeitswert bei einem rufenden Teilnehmer (10) eingegeben wird.

4. Verfahren nach Anspruch 3, **dadurch gekennzeichnet, dass** der Dringlichkeitswert an eine gewählte Rufnummer angehängt wird.

5. Verfahren nach einem der vorherigen Ansprüche, **dadurch gekennzeichnet, dass** der Dringlichkeitswert mit dem Schwellwert in einer Netzwerkeinheit (15) eines Telekommunikationsnetzes (20) verglichen wird und dass der für das Telekommunikationsendgerät (1) eingehende Ruf von der Netzwerkeinheit (15) nur dann an das Telekommunikationsendgerät (1) weitergeleitet wird, wenn der Dringlichkeitswert den Schwellwert überschreitet.

6. Verfahren nach einem der Ansprüche 1 bis 4, **dadurch gekennzeichnet, dass** der Dringlichkeitswert mit dem Schwellwert im Telekommunikationsendgerät (1) verglichen wird und dass eine Signalisierung des eingehenden Rufes am Telekommunikationsendgerät (1) nur dann eingeleitet wird, wenn der Dringlichkeitswert den Schwellwert überschreitet.

7. Verfahren nach einem der vorherigen Ansprüche, **dadurch gekennzeichnet, dass** nur für den Fall, in dem der Dringlichkeitswert kleiner oder gleich dem Schwellwert ist, eine Mitteilung über den Schwellwert an den rufenden Teilnehmer (10) übertragen wird.

8. Verfahren nach einem der vorherigen Ansprüche, **dadurch gekennzeichnet, dass** die Signalisierung des eingehenden Rufes am Telekommunikationsendgerät (1) nur dann eingeleitet wird, wenn die Rufnummer des rufenden Teilnehmers (10) mit einer vorgegebenen Rufnummer übereinstimmt.

9. Verfahren nach einem der vorherigen Ansprüche, **dadurch gekennzeichnet, dass** für den Fall, in dem der Dringlichkeitswert kleiner oder gleich dem Schwellwert ist, der eingehende Ruf in einer Anrufliste (25, 30) gespeichert wird.

10. Verfahren nach einem der vorherigen Ansprüche, **dadurch gekennzeichnet, dass** für den Fall, in dem der Dringlichkeitswert kleiner oder gleich dem Schwellwert ist, der eingehende Ruf an einen Anrufbeantworter (35, 40) weitergeleitet wird.

11. Telekommunikationsendgerät (1) mit einer Signalisierungsvorrichtung (60) zur Signalisierung eingehender Rufe, wobei eine Speichervorrichtung (45) vorgesehen ist, in der ein vorgegebener Schwellwert abgelegt ist, und wobei eine Detektionsvorrichtung (50) vorgesehen ist, in der geprüft wird, ob mit dem eingehenden Ruf ein Dringlichkeitswert empfangen wurde, wobei, falls ein Dringlichkeitswert empfangen wurde, eine Vergleichsvorrichtung (55) vorgesehen ist, in der der mit dem eingehendem Ruf empfangene Dringlichkeitswert mit dem vorgegebenen Schwellwert verglichen wird, und die Signalisierungsvorrichtung (60) zur Signalisierung des eingehenden Rufes am Telekommunikationsendgerät (1) aktiviert wird, wenn der mit dem eingehenden Ruf empfangene Dringlichkeitswert den Schwellwert überschreitet **dadurch gekennzeichnet, dass** eine Sendevorrichtung (80) vorgesehen ist, welche zum Senden einer Mitteilung über den Schwellwert an den rufenden Teilnehmer (10), als Reaktion auf den eingehenden Ruf, veranlasst wird falls kein Dringtichkeitswert empfangen wurde.

12. Telekommunikationsendgerät (1) nach Anspruch 11, **dadurch gekennzeichnet, dass** ein Rufnummerspeicher (65) mit mindestens einem Eintrag vorgesehen ist, dass eine weitere Detektionsvorrichtung (70) vorgesehen ist, welche zur Detektion einer mit dem eingehenden Ruf empfangene Rufnummer eines rufenden Teilnehmers (10) aktiviert wird, dass eine weitere Vergleichsvorrichtung (75) vorgesehen ist, die die detektierte Rufnummer mit dem mindestens einen Eintrag des Rufnummernspeichers (65) vergleicht und dass die Signalisierungsvorrichtung (60) zur Signalisierung eines eingehenden Rufes am Telekommunikationsendgerät (1) veranlasst wird, wenn die detektierte empfangene Rufnummer des rufenden Teilnehmers (10) mit einem Eintrag des Rufnummernspeichers (65) übereinstimmt.

13. Telekommunikationsendgerät (1) nach Anspruch 11 oder 12, **dadurch gekennzeichnet, dass** eine Sendevorrichtung (80) vorgesehen list. welche zum Senden einer Mitteilung über den Schwellwert an den rufenden Teilnehmer (10) aktiviert wird, wenn der Dringlichkeitswert kleiner oder gleich dem Schwellwert ist.

14. Telekommunikationsendgerät (1) nach einem der Ansprüche 11 bis 13, **dadurch gekennzeichnet, dass** eine Anrufliste (25) vorgesehen ist, in der ein eingehender Ruf gespeichert wird, wenn der Dringlichkeitswert kleiner oder gleich dem Schwellwert ist.

15. Telekommunikationsendgerät (1) nach einem der Ansprüche 11 bis 14, **dadurch gekennzeichnet, dass** ein Anrufbeantworter (35) vorgesehen ist, welcher zur Entgegennahme eines eingehenden Anrufes veranlasst wird, wenn der Dringlichkeitswert kleiner oder gleich dem Schwellwert ist.

16. Telekommunikationsendgerät (1) nach einem der Ansprüche 11 bis 15, **dadurch gekennzeichnet, dass** eine Eingabeeinheit (5) vorgesehen ist, über die der Schwellwert und/oder der Dringlichkeitswert vorgebbar ist.

17. Netzwerkeinheit (15) eines Telekommunikationsnetzes (20) mit einer Vorrichtung (85) zum Weiterleiten eines eingehenden Rufes an ein angewähltes Telekommunikationsendgerät (1), wobei eine Speichervorrichtung (90) vorgesehen ist, in der ein vorgegebener Schwellwert abgelegt ist, und wobei eine Detektionsvorrichtung (95) vorgesehen ist, in der geprüft wird, ob mit dem eingehenden Ruf ein Dringlichkeitswert empfangen wurde, wobei, falls ein Dringlichkeitswert empfangen wurde, wobei eine Vergleichsvorrichtung (100) vorgesehen ist, in der der mit dem eingehendem Ruf empfangene Dringlichkeitswert mit dem vorgegebenen Schwellwert verglichen wird, und die Vorrichtung (85) zum Weiterleiten des eingehenden Rufes zum angewählten Telekommunikationsendgerät (1) nur aktiviert wird, wenn der mit dem eingehenden Ruf empfangene Dringlichkeitswert den Schwellwert überschreitet **dadurch gekennzeichnet, dass** eine Sendevorrichtung (120) vorgesehen ist, welche zum Senden einer Mitteilung über den Schwellwert an den rufenden Teilnehmer (10), als Reaktion auf den eingehenden Ruf, veranlasst wird falls kein Dringlichkeitswert empfangen wurde.

18. Netzwerkeinheit (15) nach Anspruch 17, **dadurch gekennzeichnet, dass** ein Rufnummernspeicher (105) mit mindestens einem Eintrag vorgesehen ist, dass eine zweite Detektionsvorrichtung (110) vorgesehen ist, welche zum Detektieren einer aus einem eingehenden Ruf empfangenen Rufnummer eines rufenden Teilnehmers (10) aktiviert wird, dass eine zweite Vergleichsvorrichtung (115) vorgesehen ist, die die detektierte Rufnummer mit dem mindestens einen Eintrag des Rufnummernspeichers (105) vergleicht und dass die Vorrichtung (85) zum Weiterleiten des eingehenden Rufes zum angewählten Telekommunikationsendgerät (1) nur veranlasst wird, wenn die detektierte empfangene Rufnummer des rufenden Teilnehmers (10) mit einem Eintrag des Rufnummernspeichers (105) übereinstimmt.

19. Netzwerkeinheit (15) nach Anspruch 17 oder 18, **dadurch gekennzeichnet, dass** eine Sendevorrichtung (120) vorgesehen ist, welche zum Senden einer Mitteilung über den Schwellwert an den rufenden Teilnehmer (10) nur dann aktiviert wird, wenn der Dringlichkeitswert kleiner oder gleich dem Schwellwert ist.

20. Netzwerkeinheit (15) nach einem der Ansprüche 17 bis 19, **dadurch gekennzeichnet, dass** eine Anrufliste (30) vorgesehen ist, in der ein eingehender Ruf gespeichert wird, wenn der Dringlichkeitswert kleiner oder gleich dem Schwellwert ist.

21. Netzwerkeinheit (15) nach einem der Ansprüche 17 bis 20, **dadurch gekennzeichnet, dass** ein Anrufbeantworter (40) vorgesehen ist, welcher zur Entgegennahme eines eingehenden Anrufes veranlasst wird, wenn der Dringlichkeitswert kleiner oder gleich dem Schwellwert ist.

22. Netzwerkeinheit (15) nach einem der Ansprüche 17 bis 21, **dadurch gekennzeichnet, dass** eine Extraktionsvorrichtung (125) vorgesehen ist, welche zur Extraktion aus einer vom rufenden Teilnehmer (10) empfangenen Nummemfolge eine Rufnummer des Telekommunikationsendgerätes (1) und den Dringlichkeitswert aktiviert wird.

## Claims

1. Method for signalling an incoming call for a telecommunications terminal (1), wherein it is checked in a detection device whether an urgency value has been received with the incoming call, wherein, if an urgency value has been received, the signalling of the incoming call is initiated at the telecommunications terminal (1) only if the urgency value received with the incoming call exceeds a predetermined threshold value, **characterized in that**, if no urgency value has been received, a message about the threshold value is transmitted to the calling subscriber (10).

2. Method according to Claim 1, **characterized in that** the predetermined threshold value is input with an input unit (5) of the telecommunications terminal (1).

3. Method according to Claim 1 or 2, **characterized in that** the urgency value is input at a calling subscriber (10).

4. Method according to Claim 3, **characterized in that** the urgency value is appended to a dialled directory number.

5. Method according to one of the preceding claims, **characterized in that** the urgency value is compared with the threshold value in a network unit (15) of a telecommunication network (20) and **in that** the incoming call for the telecommunications terminal (1) is only forwarded by the network unit (15) to the telecommunications terminal (1) if the urgency value exceeds the threshold value.

6. Method according to one of Claims 1 to 4, **characterized in that** the urgency value is compared with the threshold value in the telecommunications terminal (1) and **in that** signalling of the incoming call is initiated at the telecommunications terminal (1) only if the urgency value exceeds the threshold value.

7. Method according to one of the preceding claims, **characterized in that** a message about the threshold value is transmitted to the calling subscriber (10) only for the case in which the urgency value is less than or equal to the threshold value.

8. Method according to one of the preceding claims, **characterized in that** the signalling of the incoming call is initiated at the telecommunications terminal (1) only if the directory number of the calling subscriber (10) corresponds to a predetermined directory number.

9. Method according to one of the preceding claims, **characterized in that** the incoming call is stored in a call list (25, 30) for the case in which the urgency value is less than or equal to the threshold value.

10. Method according to one of the preceding claims, **characterized in that** the incoming call is forwarded to an answering machine (35, 40) for the case in which the urgency value is less than or equal to the threshold value.

11. Telecommunications terminal (1) comprising a signalling device (60) for signalling incoming calls, wherein a storage device (45) is provided in which a predetermined threshold value is stored, and wherein a detection device (50) is provided in which it is checked whether an urgency value has been received with the incoming call, wherein, if an urgency value has been received, a comparison device (55) is provided in which the urgency value received with the incoming call is compared with the predetermined threshold value and the signalling device (60) is activated for signalling the incoming call at the telecommunications terminal (1) if the urgency value received with the incoming call exceeds the threshold value, **characterized in that** a transmitting device (80) is provided which is caused to transmit a message about the threshold value to the calling subscriber (10) as a reaction to the incoming call, if no urgency value has been received.

12. Telecommunications terminal (1) according to Claim 11, **characterized in that** a directory-number store (65) having at least one entry is provided, **in that** a further detection device (70) is provided which is activated for detecting a directory number, received with the incoming call, of a calling subscriber (10), **in that** a further comparison device (75) is provided which compares the detected directory number with the at least one entry in the directory-number store (65) and **in that** the signalling device (60) is caused to signal an incoming call at the telecommunications terminal (1) if the detected received directory number of the calling subscriber (10) corresponds to an entry in the directory-number store (65).

13. Telecommunications terminal (1) according to Claim 11 or 12, **characterized in that** a transmitting device (80) is provided which is activated for transmitting a message about the threshold value to the calling subscriber (10) if the urgency value is less than or equal to the threshold value.

14. Telecommunications terminal (1) according to one of Claims 11 to 13, **characterized in that** a call list (25) is provided in which an incoming call is stored if the urgency value is less than or equal to the threshold value.

15. Telecommunications terminal (1) according to one of Claims 11 to 14, **characterized in that** an answering machine (35) is provided which is caused to receive an incoming call if the urgency value is less than or equal to the threshold value.

16. Telecommunications terminal (1) according to one of Claims 11 to 15, **characterized in that** an input unit (5) is provided via which the threshold value and/or the urgency value can be predetermined.

17. Network unit (15) of a telecommunications network (20) comprising a device (85) for forwarding an incoming call to a dialled telecommunications terminal (1), wherein a storage device (90) is provided in which a predetermined threshold value is stored and wherein a detection device (95) is provided in which it is checked whether an urgency value has been received with the incoming call, wherein, if an urgency value has been received, wherein a comparison device (100) is provided in which the urgency value received with the incoming call is compared with the predetermined threshold value and the device (85) for forwarding the incoming call to the dialled telecommunications terminal (1) is only activated if the urgency value received with the incoming call exceeds the threshold value, **characterized in that** a transmitting device (120) is provided which is caused to transmit a message about the threshold value to the calling subscriber (10) as a reaction to the incoming call, if no urgency value has been received.

18. Network unit (15) according to Claim 17, **characterized in that** a directory-number store (105) having at least one entry is provided, **in that** a second detection device (110) is provided which is activated for detecting a directory number of a calling subscriber (10) received from an incoming call, **in that** a second comparison device (115) is provided which compares the detected directory number with the at least one entry in the directory-number store (105), and **in that** the device (85) for forwarding the incoming call to the dialled telecommunications terminal (1) is only initiated if the detected received directory number of the calling subscriber (10) corresponds to an entry in the directory-number store (105).

19. Network unit (15) according to Claim 17 or 18, **characterized in that** a transmitting device (120) is provided which is activated for transmitting a message about the threshold value to the calling subscriber (10) only if the urgency value is less than or equal to the threshold value.

20. Network unit (15) according to one of Claims 17 to 19, **characterized in that** a call list (30) is provided in which an incoming call is stored if the urgency value is less than or equal to the threshold value.

21. Network unit (15) according to one of Claims 17 to 20, **characterized in that** an answering machine (40) is provided which is caused to accept an incoming call if the urgency value is less than or equal to the threshold value.

22. Network unit (15) according to one of Claims 17 to 21, **characterized in that** an extraction device (125) is provided which is activated for extracting from a sequence of numbers received by the calling subscriber (10) a directory number of the telecommunication terminal (1) and the urgency value.

## Revendications

1. Procédé pour la signalisation d'un appel entrant destiné à un terminal de télécommunication (1), dans lequel on teste dans un dispositif de détection si une valeur d'urgence a été reçue avec l'appel entrant, dans lequel, dans le cas où une valeur d'urgence a été reçue, la signalisation de l'appel entrant ne peut être déclenchée sur le terminal de télécommunication (1) que lorsque la valeur d'urgence reçue avec l'appel entrant dépasse une valeur de seuil prédéterminée, **caractérisé en ce que** dans le cas où aucune valeur d'urgence n'a été reçue, un message concernant la valeur de seuil est transmis à l'abonné appelant (10).

2. Procédé selon la revendication 1, **caractérisé en ce que** la valeur de seuil prédéterminée est fournie en entrée au moyen d'une unité d'entrée (5) du terminal de télécommunication (1).

3. Procédé selon la revendication 1 ou 2, **caractérisé en ce que** la valeur d'urgence est fournie en entrée lorsqu'un abonné (10) effectue un appel.

4. Procédé selon la revendication 3, **caractérisé en ce que** la valeur d'urgence est associée à un numéro d'appel sélectionné.

5. Procédé selon l'une quelconque des revendications précédentes, **caractérisé en ce que** la valeur d'urgence est comparée à la valeur de seuil dans une unité de réseau (15) d'un réseau de télécommunication (20) et **en ce que** l'appel entrant destiné au terminal de télécommunication (1) n'est acheminé depuis l'unité de réseau (15) au terminal de télécommunication (1) que lorsque la valeur d'urgence dépasse la valeur de seuil.

6. Procédé selon l'une quelconque des revendications 1 à 4, **caractérisé en ce que** la valeur d'urgence est comparée à la valeur de seuil dans le terminal de télécommunication (1) et **en ce qu'**une signalisation de l'appel entrant n'est déclenchée sur le terminal de télécommunication (1) que lorsque la valeur d'urgence dépasse la valeur de seuil.

7. Procédé selon l'une quelconque des revendications précédentes, **caractérisé en ce qu'**un message concernant la valeur de seuil n'est transmis à l'abonné appelant (10) que dans le cas où la valeur d'urgence est inférieure ou égale à la valeur de seuil.

8. Procédé selon l'une quelconque des revendications précédentes, **caractérisé en ce que** la signalisation de l'appel entrant sur le terminal de communication (1) n'est déclenchée que lorsque le numéro d'appel de l'abonné appelant (10) coïncide avec un numéro d'appel prédéterminé.

9. Procédé selon l'une quelconque des revendications précédentes, **caractérisé en ce que** l'appel est mémorisé dans une liste d'appels (25, 30) dans le cas où la valeur d'urgence est inférieure ou égale à la valeur de seuil.

10. Procédé selon l'une quelconque des revendications précédentes, **caractérisé en ce que** l'appel entrant est acheminé à un répondeur téléphonique (35, 40) dans le cas où la valeur d'urgence est inférieure ou égale à la valeur de seuil.

11. Terminal de télécommunication (1) comprenant un dispositif de signalisation (60) destiné à la signalisation d'un appel entrant, comprenant un dispositif de mémoire (45) dans lequel est stockée une valeur de seuil prédéterminée, comprenant un dispositif de détection (50) dans lequel il est testé si une valeur d'urgence a été reçue avec l'appel entrant, comprenant, dans le cas où une valeur d'urgence a été reçue, un dispositif de comparaison (55) dans lequel la valeur d'urgence reçue avec l'appel entrant est comparée à la valeur de seuil, le dispositif de signalisation (60) étant activé pour la signalisation de l'appel entrant sur le terminal de télécommunication (1) lorsque la valeur d'urgence reçue avec l'appel entrant dépasse la valeur de seuil, **caractérisé en ce qu'**il comprend un dispositif d'envoi (80) qui est déclenché dans le cas où aucune valeur d'urgence n'a été reçue pour envoyer à l'abonné appelant (10) un message concernant la valeur de seuil en réaction à l'appel entrant.

12. Terminal de télécommunication (1) selon la revendication 11, **caractérisé en ce qu'**il comprend une mémoire de numéros d'appel (65) comprenant au moins une entrée, **en ce qu'**il comprend un dispositif de détection supplémentaire (70) qui est activé pour détecter un numéro d'appel d'un abonné appelant (10) reçu avec l'appel entrant, **en ce qu'**il comprend un dispositif de comparaison supplémentaire (75) qui compare le numéro d'appel détecté à l'au moins une entrée de la mémoire de numéros d'appel (65) et **en ce que** le dispositif de signalisation (60) est déclenché pour signaler un appel entrant sur le terminal de télécommunication (1) lorsque le numéro d'appel reçu et détecté de l'abonné appelant (10) coïncide avec une entrée de la mémoire de numéros d'appel (65).

13. Terminal de télécommunication (1) selon la revendication 11 ou 12, **caractérisé en ce qu'**il comprend un dispositif d'envoi (80) qui est activé pour envoyer à l'abonné appelant (10) un message concernant la valeur de seuil lorsque la valeur d'urgence est inférieure ou égale à la valeur de seuil.

14. Terminal de télécommunication (1) selon l'une quelconque des revendications 11 à 13, **caractérisé en ce qu'**il comprend une liste d'appels (25) dans laquelle est stocké un appel entrant lorsque la valeur d'urgence est inférieure ou égale à la valeur de seuil.

15. Terminal de télécommunication (1) selon l'une quelconque des revendications 11 à 14, caractérisé en qu'il comprend un répondeur téléphonique (35) qui est déclenché pour la réception d'un appel entrant lorsque la valeur d'urgence est inférieure ou égale à la valeur de seuil.

16. Terminal de télécommunication (1) selon l'une quelconque des revendications 11 à 15, caractérisé en qu'il comprend une unité d'entrée (5) au moyen de laquelle la valeur de seuil et/ou la valeur d'urgence peut/peuvent être prédéfinie(s).

17. Unité de réseau (15) d'un réseau de télécommunication (20) comprenant un dispositif (85) destiné à l'acheminement d'un appel entrant à un terminal de télécommunication sélectionné (1), comprenant un dispositif à mémoire (90) dans lequel est stockée une valeur de seuil prédéterminée, et comprenant un dispositif de détection (95) dans lequel il est testé si une valeur d'urgence a été reçue avec l'appel entrant et comprenant, dans le cas où une valeur d'urgence a été reçue, un dispositif de comparaison (100) dans lequel la valeur d'urgence reçue avec l'appel entrant est comparée à la valeur de seuil prédéterminée, et le dispositif (85) destiné à acheminer l'appel entrant au terminal de communication sélectionné (1) n'est activé que lorsque la valeur d'urgence reçue avec l'appel entrant dépasse la valeur de seuil, **caractérisée en ce qu'**elle comprend un dispositif d'envoi (120) qui est déclenché dans le cas où aucune valeur d'urgence n'a été reçue pour envoyer à l'abonné appelant (10) un message concernant la valeur de seuil en réaction à l'appel entrant.

18. Unité de réseau (15) selon la revendication 17, **caractérisée en ce qu'**elle comprend une mémoire de numéros d'appel (105) comprenant au moins une entrée, **en ce qu'**elle comprend un second dispositif de détection (110) qui est activé pour détecter à partir d'un appel entrant un numéro d'appel d'un abonné appelant (10) reçu, **en ce qu'**elle comprend un second dispositif de comparaison (115) qui compare le numéro d'appel détecté à l'au moins une entrée de la mémoire de numéros d'appel (105) et **en ce que** le dispositif (85) destiné à acheminer l'appel entrant au terminal de télécommunication sélectionné (1) n'est déclenché que lorsque le numéro d'appel reçu et détecté de l'abonné appelant (10) coïncide avec une entrée de la mémoire de numéros d'appel (105).

19. Unité de réseau (15) selon la revendication 17 ou 18, **caractérisée en ce qu'**elle comprend un dispositif d'envoi (120) qui n'est activé pour envoyer à l'abonné appelant (10) un message concernant la valeur de seuil que lorsque la valeur d'urgence est inférieure ou égale à la valeur de seuil.

20. Unité de réseau (15) selon l'une quelconque des revendications 17 à 19, **caractérisée en ce qu'**elle comprend une liste d'appels (30) dans laquelle est stocké un appel entrant lorsque la valeur d'urgence est inférieure ou égale à la valeur de seuil.

21. Unité de réseau (15) selon l'une quelconque des revendications 17 à 20, **caractérisée en ce qu'**elle comprend un répondeur téléphonique (40) qui est déclenché pour la réception d'un appel entrant lorsque la valeur d'urgence est inférieure ou égale à la valeur de seuil.

22. Unité de réseau (15) selon l'une quelconque des revendications 17 à 21, **caractérisée en ce qu'**elle comprend un dispositif d'extraction (125) qui est activé pour l'extraction d'un numéro d'appel du terminal de télécommunication (1) et de la valeur d'urgence d'une suite de numéros reçus de l'abonné appelant (10).
